# EUROPÄISCHE PATENTANMELDUNG

(11) **EP 4 140 920 A1**
(43) Veröffentlichungstag der Anmeldung: **01.03.2023**
(21) Anmeldenummer: 22189197.1
(22) Anmeldetag: 08.08.2022
(51) Int. Cl.: B65G 23/04

(54) **FÖRDERVORRICHTUNG ZUM FÖRDERN VON LEBENSMITTEL**

(30) Priorität: 18.08.2021 DE 102021121429
(71) Anmelder: Interroll Holding AG, 6592 Sant' Antonino (CH)
(72) Erfinder: Conrad, Simon, 41836 Hückelhoven (DE)
(74) Vertreter: Kohlhof, Stephan

(57) **Zusammenfassung**

Fördervorrichtung (1) zum Fördern von Lebensmittel (9) entlang einer Förderrichtung (L), umfassend ein Förderband (2), das zumindest abschnittsweise entlang der Förderrichtung (L) verfahrbar ist, ein Gestell (3) zum Tragen des Förderbandes (2), einen Trommelmotor (4) zum Antreiben des Förderbandes (2), wobei das Förderband (2) derart um eine Mantelfläche (43) des Trommelmotors (4) herum angeordnet ist, dass eine kraftschlüssige Antriebsverbindung zwischen der Mantelfläche (43) und dem Förderband (2) hergestellt ist, wobei die Mantelfläche (43) Polyurethan umfasst, insbesondere aus Polyurethan gebildet ist, und eine Härte zwischen 60 und 80 ShoreA aufweist.

## Beschreibung

Die Erfindung betrifft eine Fördervorrichtung zum Fördern von Lebensmittel.

In der Lebensmittelindustrie sind hygienische Anforderungen zu beachten. Die Ansammlung von Bakterien und anderen Keimen ist hierbei durch konstruktive Maßnahmen zu vermeiden.

Zum Antrieb von Förderbändern sind im Wesentlichen zwei Antriebskonzepte bekannt. Bei einer kraftschlüssigen Antriebsverbindung erfolgt die Kraftübertragung von der Antriebsrolle, insbesondere von einem Trommelmotor, kraftschlüssig auf das Förderband. Hierzu ist eine gewisse Normalkraft zwischen dem Förderband und der Antriebsrolle in Verbindung mit einem hohen Reibkoeffizient erforderlich. Der ausreichende Reibkoeffizient kann durch Anbringen eines bestimmten Materials auf der Außenfläche der Antriebsrolle erreicht werden. Zudem wird das Förderband um die Antriebsrolle gespannt gehalten, um die Normalkraft aufrecht zu erhalten.

Im Gegensatz dazu sind Förderbänder bekannt, bei denen die Antriebskraft formschlüssig von einer Antriebsrolle auf das Förderband aufgebracht wird. Hierzu sind an der Antriebsrolle und an dem Förderband zueinander korrespondierende Formelemente vorgesehen. Eine solche Anordnung ist aus der US 2015/0175361 A1 bekannt. Die Antriebsrolle weist dementsprechend eine profilierte Mantelfläche auf.

Die vorliegende Erfindung bezieht sich auf eine Fördervorrichtung mit kraftschlüssiger Antriebsverbindung.

In der Praxis (https://www.interroll.com/fileadmin/Downloads/Catalogs/Drum_Motors/Drum_Motors_DE.pdf) werden bei Fördervorrichtungen mit kraftschlüssig angetriebenen Förderbändern solche Antriebsrollen verwendet, die mit außenseitig mit NBR (Acrylnitril-Butadien-Kautschuk, auch Nitrilkautschuk oder Nitrile Butadiene Rubber) versehen sind. Für einen guten Reibkontakt zwischen der Antriebsrolle und dem Förderband weist die Oberfläche des NBR eine vergleichsweise geringe Härte auf. Härtere Oberflächen hingegen werden für formschlüssige Antriebsverbindungen verwendet, die damit wiederum verschließfester sind, aber nicht genügend Haftung für die kraftschlüssige Antriebsverbindung breit stellen.

Zwar ist die Oberfläche des NBR für lebensmitteltechnische Anwendungen geeignet. Allerdings ist im Betrieb die weiche NBR-Oberfläche einem derartigen Abrieb ausgesetzt, so dass die Oberfläche raue Poren ausbildet, ähnlich der Oberfläche eines Radiergummis nach ausgiebiger Benutzung. In diesen rauen Poren steigt das Risiko zu vermehrten Keimansammlung an. Bei harten Oberflächen oberhalb von 90 ShoreA ist dieser Effekt nicht zu beobachten.

Die EP 3 623 321 A1 offenbart ein Transportsystem mit einem Transportband und einer Antriebswalze, die das Transportband antreibt. Zur formschlüssigen Kraftübertragung weist die Antriebswalze Antriebsstege auf, die in Antriebsnuten des Transportbandes eingreifen.

Die EP 2 444 681 B1 offenbart eine Walze die vorwiegend im Bereich der Druckindustrie zum Einsatz kommt. Die Walze kann einen elastomerbeschichteten Mantel aufweisen. Eine Vielzahl von Materialien für die Oberfläche der Walze sind dabei undifferenziert nebeneinander aufgeführt. Mit den Besonderheiten der Hygieneanforderungen in der lebensmittelverarbeitenden Industrie befasst sich diese Schrift nicht.

Es ist Aufgabe der vorliegenden Erfindung, de Hygiene im Bereich der Lebensmittelförderung zu verbessern..

Die Erfindung betrifft eine Lebensmittelfördervorrichtung, eine Verwendung sowie ein Trommelmotor nach den Hauptansprüchen;; Ausgestaltungen sind Gegenstand der Unteransprüche sowie der Beschreibung.

Polyurethan stellt dabei insbesondere den anteilsmäßig größten Bestandteil der Mantelfläche dar.

Eine Mantelfläche, die aus Polyurethan gebildet ist, kann Additive, z.B. Weichmacher, aufweisen.

Intensive Versuche mit unterschiedlichen Materialien für die Oberfläche haben gezeigt, dass PU einen vergleichsweisen schlechten Nährboden für Keime ausbildet, auch nach einer langen Betriebsdauer. Bereits nach kurzer Benutzung kann eine um 25% reduzierte Keimbelastung verglichen mit dem Oberflächen aus NBR festgestellt werden. Es ist davon auszugehen, dass sich dieser positive Effekt bei einer Dauerbelastung noch steigern wird, da die nutzungsbedingte Zunahme der Rauigkeit bei PU während der Betriebsdauer deutlich geringer ausfällt als bei NBR.

Für die kraftschlüssige Verbindung ist die Mantelfläche unprofiliert ausgebildet.

Insofern kann die Hygiene einer solchen Fördervorrichtung durch den Einsatz von weichem PU anstelle von NBR deutlich verbessert werden.

Die beanspruchte Fördervorrichtung wird anhand der Figuren nachfolgend näher erläutert; hierin zeigt:
- Figur 1: schematisch eine beanspruchte Fördervorrichtung in perspektivischer Ansicht;
- Figur 2: einen nicht maßstabsgetreuen Längsschnitt durch die Fördervorrichtung nach Figur 1.

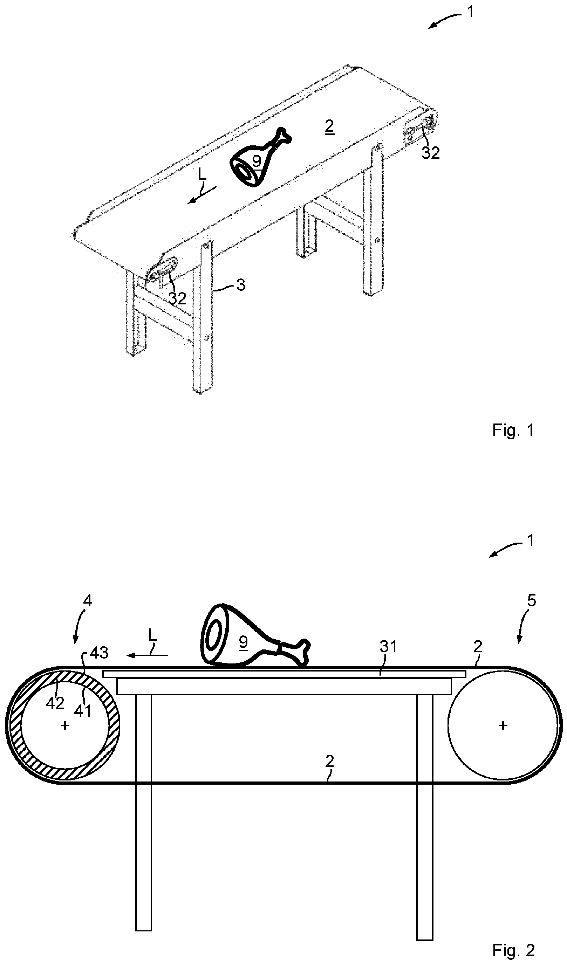

Die Figuren 1 und 2 zeigen eine erfindungsgemäße Fördervorrichtung 1 zum Fördern eines Förderguts 9 in Form eines Lebensmittels entlang einer Förderrichtung L. Das Lebensmittel 9 kann verpackt oder unverpackt sein. Die Förderrichtung L ist horizontal ausgerichtet.

Die Fördervorrichtung 1 umfasst ein Förderband 2, auf dem das Fördergut 9 zur Anlage kommt. Während der Förderung des Förderguts 9 auf dem Förderband 2 bewegt sich das Fördergut 9 mit derselben Geschwindigkeit wie das Förderband 2.

Das Förderband 2 ist um zwei Rollen geführt. Eine erste Rolle ist eine Antriebsrolle und im vorliegenden Fall ein Trommelmotor 4. Eine zweite Rolle ist eine frei drehbare Umlenkrolle 5.

Das Förderband 2, der Trommelmotor 4 sowie die Umlenkrolle 5 sind auf einem Gestell 3 gehalten. Das Gestell umfasst ein Gleitbett 31, auf dem ein Obertrum des Förderbandes 2 zwischen dem Trommelmotor 4 und der Umlenkrolle 5 aufliegt.

Das Förderband 2 ist zwischen dem Trommelmotor 4 und der Umlenkrolle 4 gespannt. Die Antriebskraft wird daher kraftschlüssig von dem Trommelmotor 4 auf das Förderband 2 übertragen. Mithilfe einer Spannvorrichtung 32 kann die Spannung des Förderbandes 2 erzeugt und/oder eingestellt werden.

Der Trommelmotor 4 weist einen angetriebenen Trommelkörper 41 insbesondere aus Edelstahl auf. Auf dem Trommelköper ist eine Hülse 42 mit einer insbesondere unprofilierten Mantelfläche 43 aus Polyurethan angebracht. Die Mantelfläche 42 steht mit dem Förderband 2 in kraftschlüssiger Antriebsverbindung. Die Mantelfläche 43 weist eine Härte von 60-80 ShoreA auf.

Die Hülse kann durch Aufvulkanisieren an dem Trommelkörper befestigt sein. Alternativ kann die Hülse um den Trommelkörper angegossen werden.

### Bezugszeichenliste

- 1: Fördervorrichtung
- 2: Förderband
- 3: Gestell
- 31: Gleitbett
- 32: Spannvorrichtung
- 4: Trommelmotor
- 41: Trommelkörper
- 42: PU-Hülse
- 43: Mantelfläche
- 5: Umlenkrolle
- 9: Lebensmittel
- L: Förderrichtung

## Patentansprüche

1. Fördervorrichtung (1) zum Fördern von Lebensmittel (9) entlang einer
Förderrichtung (L), umfassend
ein Förderband (2), das zumindest abschnittsweise entlang der Förderrichtung (L) verfahrbar ist,
ein Gestell (3) zum Tragen des Förderbandes (2),
einen Trommelmotor (4) zum Antreiben des Förderbandes (2),
wobei das Förderband (2) derart um eine Mantelfläche (43) des Trommelmotors (4) herum angeordnet ist, dass eine kraftschlüssige Antriebsverbindung zwischen der Mantelfläche (43) und dem Förderband (2) hergestellt ist,
**dadurch gekennzeichnet,**
**dass** die Mantelfläche (43) Polyurethan umfasst, insbesondere aus Polyurethan gebildet ist, und eine Härte zwischen 60 und 80 ShoreA aufweist.

2. Fördervorrichtung (1) nach dem vorherigen Anspruch,
**dadurch gekennzeichnet,**
**dass** die Mantelfläche zu einem Anteil von zumindest 50 Gew.-%, insbesondere zumindest 90 Gew.-%, aus Polyurethan gebildet ist.

3. Fördervorrichtung (1) nach einem der vorherigen Ansprüche,
**dadurch gekennzeichnet,**
**dass** die Mantelfläche unprofiliert ausgebildet ist.

4. Verwendung einer Fördervorrichtung nach dem vorherigen Anspruch zum Fördern von Lebensmittel (9).

5. Verwendung nach dem vorherigen Anspruch, wobei das Lebensmittel (9) unverpackt ist.

6. Verwendung nach Anspruch 4 oder 5, wobei das Lebensmittel (9) rohes Fleisch, rohen Fisch oder rohes Geflügel umfasst.

7. Trommelmotor (4) zum Antreiben einer Fördervorrichtung, insbesondere einer Fördervorrichtung nach einem der Ansprüche 1 bis 3,
der Trommelmotor weist eine Mantelfläche (43) auf, wobei die Mantelfläche eingerichtet ist, mit einem Förderband (2) der Fördervorrichtung (1) eine kraftschlüssge Antriebsverbindung auszubilden,
**dadurch gekennzeichnet,**
**dass** die Mantelfläche (43) Polyurethan umfasst und eine Härte zwischen 60 und 80 ShoreA aufweist.

8. Trommelmotor (4) nach dem vorherigen Anspruch,
**dadurch gekennzeichnet,**
**dass** die Mantelfläche zu einem Anteil von zumindest 50 Gew.-%, insbesondere zumindest 90 Gew.-%, aus Polyurethan gebildet ist.

9. Trommelmotor (4) nach Anspruch 7 oder 8,
**dadurch gekennzeichnet,**
**dass** die Mantelfläche unprofiliert ausgebildet ist.
